# EUROPEAN PATENT APPLICATION

(11) **EP 3 142 213 A1**
(43) Date of publication of application: **15.03.2017**
(21) Application number: 15789618.4
(22) Date of filing: 11.05.2015
(51) Int. Cl.: H02J 7/00, H02M 1/00

(54) **DEVICE FOR CHARGING ELECTRICAL APPLIANCES**

(30) Priority: 09.05.2014 ES 201430629
(71) Applicant: Wall Mobile Charger, S.L., 08021 Barcelona (ES)
(72) Inventor: CRUSELLAS LOSA, Jaime, E-08021 Barcelona (ES)
(74) Representative: Herrero & Asociados, S.L.
(86) International application number: PCT/ES2015/070373
(87) International publication number: WO 2015/169996

(57) **Abstract**

The present invention relates to a device for charging electrical appliances comprising a connector (2) for connection to an electrical appliance, and characterized in that it comprises a plate (1) that can be mounted on a wall and a cable (9) that can be extended from an idle position to a position of use, said connector (2) being arranged at one of the ends of said cable (9).

The invention allows providing a universal charger which is set into a wall in any place, as desired, such as an office, a hotel or any public place.

## Description

The present invention relates to a charging device for charging electrical appliances, particularly to a universal charging device for charging portable appliances, such as mobile telephones, music players, and the like.

### Background of the Invention

Mobile telephones and portable devices generally provide an increasing number of features and are used intensively. For example, mobile telephones are now permanently connected to the Internet and receive real time notifications on e-mail, social networks, news, etc.

These features and uses have the drawback of wasting a lot of energy, so mobile devices must be charged with increasing frequency.

In practice, it is common for a latest generation mobile telephone, for example, to require daily charging since its battery lasts for barely 24 hours or less.

This means that the user must have one or more chargers for connection to the power grid in order to charge it and use it when desired.

As a result, it is obvious that the existence of a universal charging device available in places such as offices, hotels, and public places in general, would have the enormous advantage of users not having to carry personal chargers with them.

### Description of the Invention

The charging device of the invention solves the mentioned drawbacks, providing other advantages that will be described below.

The charging device for charging electrical appliances according to the present invention comprises a connector for connection to an electrical appliance, and is characterized in that it comprises a plate that can be mounted on a wall and a cable that can be extended from an idle position to a position of use, said connector being arranged at one of the ends of said cable.

According to a preferred embodiment, said cable, in the idle position, is wound around a rotating reel rotating about an axis of rotation mounted on said plate.

Said rotating reel preferably comprises at one of its ends a cogwheel associated with a pawl, such that said pawl allows rotation of the reel in one direction, but prevents rotation in the opposite direction.

Furthermore, said rotating reel is preferably associated with an elastic spring, applying pressure on the axis of rotation to force the cable to the idle position.

The charging device for charging electrical appliances according to the present invention also advantageously comprises a base plate connected to the power grid and to the cable, regulating the output voltage of the cable so that it is suitable for charging the portable electrical appliance.

Advantageously, the charging device for charging electrical appliances according to the present invention also comprises a pushbutton associated with said pawl to prevent said pawl from coming into contact with the rotating reel.

Furthermore, the charging device according to the present invention also preferably comprises a cover provided with a hinged lid for the passage of said cable.

The charging device according to the present invention provides a universal charger which is set into a wall in any place, as desired, such as an office, a hotel or any public place, such that the user does not need to have their own charger to be able to charge their mobile telephone, for example.

Furthermore, when the charger is not in use, the cable of the charger is rolled up completely, and in the position of use, the cable has a length suitable for allowing using same comfortably.

### Brief Description of the Drawings

To better understand the preceding description, drawings are attached in which a practical embodiment is schematically depicted only by way of a non-limiting example.
Figure 1 is a side view of the charging device for charging electrical appliances according to the present invention;
Figure 2 is a perspective view of the reel of the charging device according to the present invention with the cable wound around it, and in which the pawl acting on the cogwheel can be seen;
Figure 3 is a perspective view of the charging device according to the present invention, with the cover and the casing removed; and
Figure 4 is a side view of the reel of the charging device according to the present invention, in which the elastic spring housed inside the reel can be seen.

### Description of a Preferred Embodiment

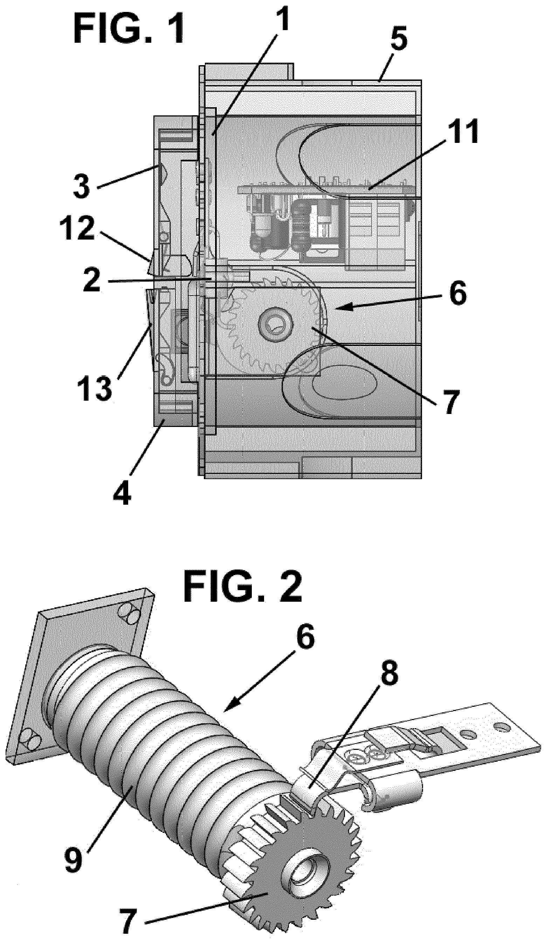

As can be seen in Figure 1, the charging device for charging electrical appliances according to the present invention comprises a plate 1 on which the main components of the device are mounted as will be described below, a connector 2 which is arranged in the idle position in the front part of said plate 1 in a housing, a cover 3 arranged on the front part of said plate 1, a frame 4 arranged around said cover 3 and a casing 5 which in the position of use is set in a wall and houses the components mounted on the plate 1.

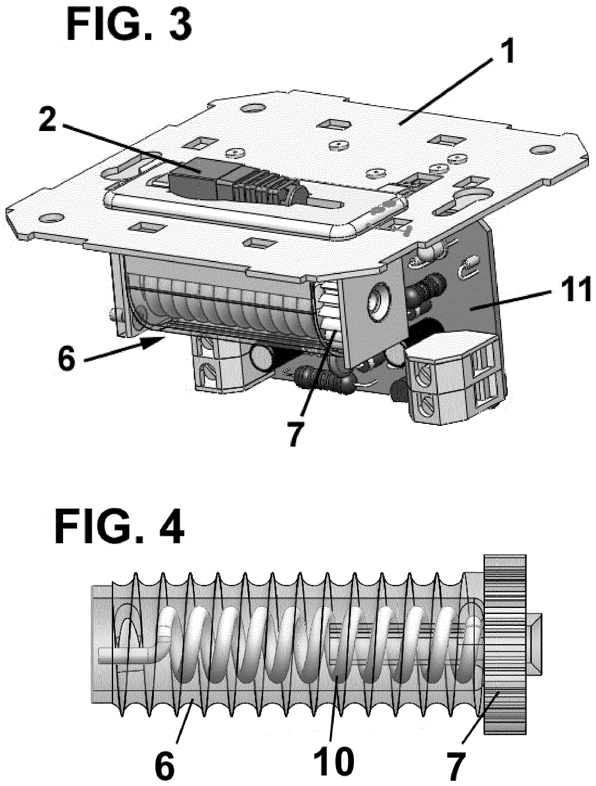

As can be seen in Figures 2 and 3, there is mounted on said plate 1 a rotating reel 6 around which a cable 9 that can be extended from an idle position (shown in the drawings) and a position of use is wound. The connector 2, which is preferably a universal connector, such as a mini-USB connector, a USB connector or the like, which allows connecting most known mobile devices, is arranged in at one of the ends of said cable 2.

Said rotating reel 6 comprises at one of its ends a cogwheel 7 configured with teeth provided with a curved portion and a straight portion, as shown in Figure 2. The rotating reel 6 also comprises an elastic spring 10 therein, the function of which is to force the reel 6 to rotate so that the cable 9 is in the idle position.

Said teeth of the cogwheel 7 are associated with a pawl 8, the function of which is to prevent rotation of the rotating reel 6 in one direction of rotation, particularly to prevent the cable 9 from returning automatically to the idle position due to the action of said elastic spring 10.

The charging device according to the present invention also comprises a base plate 11 connected to the power grid and to the cable, the main function of which is to regulate the output voltage of the cable to allow correctly charging a portable electrical appliance.

It must be indicated that Figure 3 shows different electronic components mounted on the base plate 11. These electronic components are conventional components and will not be described in detail in the present description.

In turn, the cover 3 comprises a pushbutton 12 for actuating the movement of the pawl 8 to a position in which it is not in contact with the teeth of the cogwheel 7, and a hinged lid 13 to allow the passage of said cable 9.

The operation of the charging device according to the present invention is as follows: from the idle position depicted in the drawings, when the user wants to charge an electrical appliance, such as a mobile telephone, they must open the lid 13 to allow taking out the connector 2. To that end, the user will pull on the connector 2, in turn pulling on the cable 9 which will gradually unwind itself from the reel 6 by rotating about its axis of rotation. The pawl 8 will allow said rotation of the reel 6 as a result of the tooth configuration of the cogwheel 7.

When a sufficient length of cable 9 has been unwound so as to allow it to be comfortably connected to the electrical appliance, the user will stop pulling on the connector 2, at which time the pawl 8 will lock the reel 6 in the position it is in.

When the user no longer wants to use the charging device of the present invention, they will only need to disconnect the connector 2 from the electrical appliance and press the pushbutton 12.

By actuating the pushbutton 12, the pawl 8 will no longer be in contact with the teeth of the cogwheel 7, allowing rotation of the reel 6 in the direction opposite the previous rotational movement, as a result of the action of the elastic spring 10, and rolling the cable up again, winding it around the reel 6.

Although reference has been made to a specific embodiment of the invention, it is obvious for a person skilled in the art that the charging device described is susceptible to a number of changes and modifications, and that all the mentioned details can be replaced with other technically equivalent details, without departing from the scope of protection defined by the attached claims.

## Claims

1. Charging device for charging electrical appliances, comprising a connector (2) for connection to an electrical appliance, **characterized in that** it comprises a plate (1) that can be mounted on a wall and a cable (9) that can be extended from an idle position to a position of use, said connector (2) being arranged at one of the ends of said cable (9).

2. Charging device for charging electrical appliances according to claim 1, wherein said cable (9), in the idle position, is wound around a rotating reel (6) rotating about an axis of rotation mounted on said plate (1).

3. Charging device for charging electrical appliances according to claim 2, wherein said rotating reel (6) comprises at one of its ends a cogwheel (7) associated with a pawl (8), such that said pawl (8) allows rotation of the reel (6) in one direction, but prevents rotation in the opposite direction.

4. Charging device for charging electrical appliances according to claim 2 or 3, wherein said rotating reel (6) is associated with an elastic spring (10), applying pressure on the axis of rotation to force the cable (9) to the idle position.

5. Charging device for charging electrical appliances according to claim 1, also comprising a base plate (11) connected to the power grid and to the cable (9), regulating the output voltage of the cable (9).

6. Charging device for charging electrical appliances according to claim 3, also comprising a pushbutton (12) associated with said pawl (8) to prevent said pawl (8) from coming into contact with the rotating reel (6).

7. Charging device for charging electrical appliances according to any of the preceding claims, also comprising a cover (3) provided with a hinged lid (13) for the passage of said cable (9).
